(19) Europäisches Patentamt / European Patent Office / Office européen des brevets

(11) **EP 4 657 319 A2**

(12) **EUROPEAN PATENT APPLICATION**

(43) Date of publication:
**03.12.2025 Bulletin 2025/49**

(21) Application number: **25202783.4**

(22) Date of filing: **17.09.2025**

(51) International Patent Classification (IPC):
**G06N 3/045** (2023.01)    **G06N 3/088** (2023.01)
**G06V 10/50** (2022.01)    **G10L 13/027** (2013.01)
**G10L 15/02** (2006.01)    **G10L 15/16** (2006.01)
**G10L 15/26** (2006.01)    **G06F 40/30** (2020.01)
**G06F 40/40** (2020.01)    **G10L 15/22** (2006.01)
**G06F 40/284** (2020.01)    **G06F 16/3329** (2025.01)
**G06F 16/245** (2019.01)

(52) Cooperative Patent Classification (CPC):
**G06F 40/30; G06F 16/245; G06F 16/3329;**
**G06F 40/284; G06F 40/40; G06N 3/045;**
**G06N 3/088; G06V 10/50; G10L 13/027;**
**G10L 15/02; G10L 15/16; G10L 15/22; G10L 15/26**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.03.2025 CN 202510397069**

(71) Applicant: **Beijing Baidu Netcom**
**Science Technology Co., Ltd.**
**Beijing 100085 (CN)**

(72) Inventors:
• **JIA, Lei**
**Beijing 100085 (CN)**
• **PENG, Xingyuan**
**Beijing 100085 (CN)**
• **DENG, Aiwen**
**Beijing 100085 (CN)**
• **WANG, Guibin**
**Beijing 100085 (CN)**
• **LIU, Chaorun**
**Beijing 100085 (CN)**
• **XU, Yangkai**
**Beijing 100085 (CN)**
• **CONG, Shijun**
**Beijing 100085 (CN)**
• **SHI, Letong**
**Beijing 100085 (CN)**
• **DING, Jupeng**
**Beijing 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD OF PERFORMING TASK BASED ON LARGE MODEL AND ELECTRONIC DEVICE**

(57) The present disclosure provides a method and an apparatus of performing a task based on a large model, an intelligent agent and an electronic device, which relate to a field of artificial intelligence technology, and in particular to technical fields of voice interaction, deep learning, large model, etc. The method includes: acquiring a demand feature characterizing a demand intention; performing a target processing task by using the large model according to the demand feature, so as to obtain a response text matched with the demand intention, where a target response word in the response text is determined based on: determining a query feature for each of a plurality of attention subtasks in the target processing task based on an associated response word feature, where the associated response word feature is determined based on an associated response word in the response text; and performing, based on the demand feature read from a storage unit as a value feature and a key feature shared by the plurality of attention subtasks, the plurality of attention subtasks by using a computing unit according to a plurality of query features, the value feature and the key feature.

FIG. 2A

**Description**

TECHNICAL FIELD

The present disclosure relates to a field of artificial intelligence technology, and in particular to technical fields of voice interaction, deep learning, large model, etc., which may be applied to application scenarios such as knowledge search, autonomous drive, intelligent customer service, intelligent voice control, smart E-commerce, AI medical care, etc.

BACKGROUND

With a rapid development of an artificial intelligence technology, multi-modality input information such as text, voice, video, etc. input by a user may be processed based on an artificial intelligence generated content (AIGC) technology during a human-computer interaction, and the input information may be processed based on a larger-scale model parameter of a large model, so as to generate information required by the user, such as retrieval content, question answers, etc.

SUMMARY

The present disclosure provides a method of performing a task based on a large model, an electronic device and a storage medium.

According to an aspect of the present disclosure, a method of performing a task based on a large model is provided, including: acquiring a demand feature characterizing a demand intention; performing a target processing task by using the large model according to the demand feature, so as to obtain a response text matched with the demand intention, where a target response word in the response text is determined based on: determining a query feature for each of a plurality of attention subtasks in the target processing task based on an associated response word feature, where the associated response word feature is determined based on an associated response word in the response text; and performing, based on the demand feature read from a storage unit as a value feature and a key feature shared by the plurality of attention subtasks, the plurality of attention subtasks by using a computing unit according to a plurality of query features, the value feature and the key feature, so as to obtain the target response word.

According to another aspect of the present disclosure, an electronic device is provided, including: at least one processor; and a memory communicatively connected to the at least one processor; where the memory is used to store instructions executable by the at least one processor, and the instructions, when executed by the at least one processor, are used to cause the at least one processor to perform the method of performing a task based on a large model provided in embodiments of the present disclosure.

According to another aspect of the present disclosure, a non-transitory computer-readable storage medium having computer instructions stored thereon is provided, where the computer instructions are used to cause a computer to perform the method of performing a task based on a large model provided in embodiments of the present disclosure.

According to another aspect of the present disclosure, a computer program product is provided, including a computer program, where the computer program, when executed by a processor, is used to implement the method of performing a task based on a large model provided in embodiments of the present disclosure.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

Accompanying drawings are used for better understanding of the solution and do not constitute a limitation to the present disclosure, in which:

FIG. 1 schematically shows an exemplary system architecture to which a method and an apparatus of performing a task based on a large model may be applied according to embodiments of the present disclosure;

FIG. 2A schematically shows a flowchart of a method of performing a task based on a large model according to embodiments of the present disclosure;

FIG. 2B schematically shows a flowchart of determining a target response word in a response text according to embodiments of the present disclosure;

FIG. 3 schematically shows a principle diagram of a method of performing a task based on a large model according to embodiments of the present disclosure;

FIG. 4 schematically shows a schematic principle diagram of performing a plurality of attention subtasks;

FIG. 5 schematically shows an application scenario diagram of a method of performing a task based on a large model according to embodiments of the present disclosure;

FIG. 6 schematically shows a block diagram of an apparatus of performing a task based on a large model according to embodiments of the present disclosure;

FIG. 7 schematically shows a structural block diagram of an artificial intelligence agent according to embodiments of the present disclosure; and

FIG. 8 shows a schematic block diagram of an electronic device 800 for implementing a method of performing a task based on a large model according to embodiments of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those skilled in the art should realize that various changes and modifications may be made to embodiments described herein without departing from the scope and spirit of the present disclosure. Likewise, for clarity and conciseness, descriptions of well-known functions and structures are omitted in the following description.

In the technical solution of the present disclosure, an acquisition, a storage, a use, etc. of user personal information involved all comply with provisions of relevant laws and regulations, take necessary confidentiality measures, and do not violate public sequence and good custom.

Inventors have found that a multi-modality input information of a user may be processed based on a large model so as to make a respond to the user. However, a large model used to generate a response information is difficult to efficiently and stably generate a content matched with the user's needs and intentions, which may easily lead to problems such as a high computational overhead, an excessive storage resource occupation, etc. of a computing device that performs the response information to generate a task based on a model parameter of the large model.

Embodiments of the present disclosure provide a method and an apparatus of performing a task based on a large model, an intelligent agent, an electronic device and a storage medium. The method of performing a task based on a large model includes: acquiring a demand feature characterizing a demand intention; performing a target processing task by using the large model according to the demand feature, so as to obtain a response text matched with the demand intention, where a target response word in the response text is determined based on: determining a query feature for each of a plurality of attention subtasks in the target processing task based on an associated response word feature, where the associated response word feature is determined based on an associated response word in the response text; and performing, based on the demand feature read from a storage unit as a value feature and a key feature shared by the plurality of attention subtasks, the plurality of attention subtasks by using a computing unit according to a plurality of query features, the value feature and the key feature, so as to obtain the target response word.

According to embodiments of the present disclosure, by acquiring the demand feature characterizing the demand intention, and determining the demand feature read from the storage unit as the value feature and the key feature shared by the plurality of attention subtasks in the large model, the plurality of attention subtasks may be performed by the computing unit, which may avoid that the computing unit calculates and stores the value feature and the key feature for each attention subtask, resulting in an excessive storage space occupation. The attention subtasks may be performed by the computing unit according to the query feature of each of the plurality of attention subtasks determined based on the associated response word feature, and the shared value feature and key feature, which may save a computing overhead generated and a storage space occupation of the computing unit when performing a target processing task based on the large model, thereby improving an efficiency of generating a response text.

In order to facilitate understanding of embodiments of the present disclosure, the meanings of the English abbreviations or technical terms involved in embodiments of the present disclosure may be explained based on the following content.

Artificial Intelligence Generated Content (AIGC for short) is a technology that generates a relevant content with an appropriate generalization capability through learning and pattern recognition of existing data by using an artificial intelligence technology, especially a method of a large pre-trained model, etc. A core idea of the AIGC technology is to generate a content with certain creativity and quality by using an artificial intelligence algorithm, which may generate a relevant article, images, audio, etc. based on an input condition or guidance.

The large model may include a deep learning model with a large number of parameters and complex structures. The large model may process massive data and perform various types of complex tasks based on large-scale model parameters and complex model structures, such as natural language processing, computer vision, voice recognition, and other complex tasks. The large model may be constructed based on a deep neural network and has billions or even hundreds of billions of parameters. They may learn complex patterns and features by training massive data, have a stronger generalization capability, and may make an accurate prediction on unseen data. The large model may include a large language model (LLM for short), and the large language model may be a model based on machine learning and a natural language processing technology, and may learn an ability to serve human language understanding and generation by training a large number of text data. The large model may have billions or even hundreds of billions of parameters, which enables them to capture more language knowledge and complex grammatical structures. In terms of a network structure of the large language model, for example, a network structure such as a transformer, etc. may be used. The large language model has a strong context-awareness when processing a text, and may understand and generate a text content that depends on a previous text, so as to realize a relatively accurate understanding of the text content in terms of dialogue, article generation, and context understanding. The large model involved in embodiments of the present disclosure may include the large language model, or may also include other types of generative large models besides the large language model.

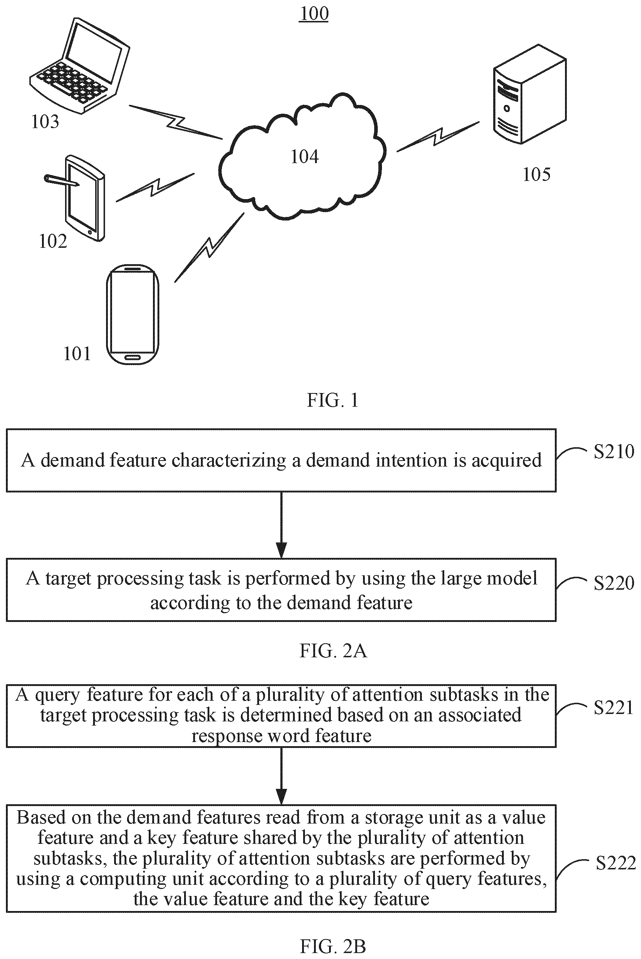

FIG. 1 schematically shows an exemplary system architecture to which a method and an apparatus of performing a task based on a large model may be applied according to embodiments of the present disclosure.

It should be noted that FIG. 1 only shows an example of a system architecture to which embodiments of the present disclosure may be applied, so as to help those skilled in the art understand the technical content of the present disclosure. However, it does not mean that embodiments of the present disclosure may not be used in other devices, systems, environments or scenarios. For example, in another embodiment, an exemplary system architecture to which a method and an apparatus of performing a task based on a large model may be applied may include a terminal device. However, the terminal device may implement the method and the apparatus of performing a task based on a large model provided in embodiments of the present disclosure without interacting with a server.

As shown in FIG. 1, a system architecture 100 according to the embodiment may include terminal devices 101, 102 and 103, a network 104, and a server 105. The network 104 is a medium for providing a communication link between the terminal devices 101, 102 and 103 and the server 105. The network 104 may include various connection types, such as wired and/or wireless communication links, etc.

The user may use the terminal devices 101, 102 and 103 to interact with the server 105 through the network 104, so as to receive or send a message, etc. Various communication client applications may be installed on the terminal devices 101, 102 and 103, such as a knowledge reading application, a web browser application, a search application, an instant messaging tool, an email client and/or social platform software, etc. (for example only).

The terminal devices 101, 102 and 103 may be various electronic devices having a display screen and supporting web browsing, including but not limited to a smart phone, a tablet computer, a laptop computer, a desktop computer, etc.

The server 105 may be a server that provides various services, such as a background management server that provides a support for a content browsed by the user using the terminal devices 101, 102, and 103 (for example only). The background management server may analyze and process the received user request and other data, and feed back a processing result (such as a web page, information, or data, etc. acquired or generated according to a user request) to the terminal device.

The server 105 may be a cloud server, also known as a cloud computing server or cloud host, which is a host product in a cloud computing service system, so as to solve defects of a difficult management and a weak business scalability in a traditional physical host and a VPS service ("Virtual Private Server", or "VPS" for short). The server 105 may also be a server of a distributed system, or a server combined with a blockchain.

It should be noted that the method of performing a task based on a large model provided in embodiments of the present disclosure may generally be performed by the server 105. Accordingly, the apparatus of performing a task based on a large model provided in embodiments of the present disclosure may generally be provided in the server 105. The method of performing a task based on a large model provided in embodiments of the present disclosure may also be performed by a server or server cluster that is different from the server 105 and may communicate with the terminal devices 101, 102 and 103 and/or the server 105. Accordingly, the apparatus of performing a task based on a large model provided in embodiments of the present disclosure may also be provided in a server or server cluster that is different from the server 105 and may communicate with the terminal devices 101, 102 and 103 and/or the server 105.

It should be understood that the number of terminal devices, networks and servers in FIG. 1 is merely schematic, and any number of terminal devices, networks and servers may be provided based on actual needs.

FIG. 2A schematically shows a flowchart of a method of performing a task based on a large model according to embodiments of the present disclosure.

As shown in FIG. 2A, the method of performing a task based on a large model includes operations S210 to S220.

In the operation S210, a demand feature characterizing a demand intention is acquired.

In the operation S220, a target processing task is performed by using the large model according to the demand feature, so as to obtain a response text matched with the demand intention.

According to embodiments of the present disclosure, the demand intention may be, for example, a commodity quality inquiry intention, a device operation intention, etc. of the user, and the specific type of the demand intention will not be limited in embodiments of the present disclosure. The demand feature may be obtained by performing a feature extraction on a demand information of a target object. The demand information may include information of any modality, such as text, voice, image and other modalities. The demand feature characterizes a demand intention expressed by the information of any modality.

According to embodiments of the present disclosure, the demand feature may imply a demand intention of the target object. By performing the target processing task using the large model according to the demand feature, the large model may understand the demand intention more clearly and generate the response text matched with the demand intention based on a powerful text generation capability of the large model, so that the response text may meet the demand intention of the target object.

FIG. 2B schematically shows a flowchart of determining a target response word in a response text according to embodiments of the present disclosure.

As shown in FIG. 2B, the target response word in the response text is determined based on operations S221 to S222.

In the operation S221, a query feature for each of a plurality of attention subtasks in the target processing task is determined based on an associated response word feature.

In the operation S222, based on the demand features read from a storage unit as a value feature and a key feature shared by the plurality of attention subtasks, the plurality of attention subtasks are performed by using a computing unit according to a plurality of query features, the value feature and the key feature, so as to obtain the target response word.

According to embodiments of the present disclosure, the response text may include a structured text information such as a table, etc., or may also include an unstructured text information such as a novel, an abstract, etc. The specific type of the response text will be limited in embodiments of the present disclosure. The target response word and the associated response word may be response words in the response text. The associated response word feature is determined based on the associated response word in the response text. For example, the associated response word feature may be obtained by performing a feature extraction on one or more associated response words.

In an example, the associated response word may be one or more response words arranged before the target response word in the response text. The associated response word feature may be obtained by performing a feature extraction on the associated response word based on an attention mechanism.

According to embodiments of the present disclosure, the plurality of attention subtasks in the target processing task may include a data processing process performed by a plurality of attention heads in a multi-head attention network, and the plurality of query features are respectively applied to the plurality of attention subtasks. The determining a query feature for each of a plurality of attention subtasks in the target processing task based on an associated response word feature may include calculating the associated response word feature based on a query weight of each of the plurality of attention subtasks, so as to obtain the query feature corresponding to each of the plurality of attention subtasks.

According to embodiments of the present disclosure, the computing unit may include a graphics processing unit (GPU), a tensor processing unit (TPU), a central processing unit (CPU), a neural network processing unit (NPU), an artificial intelligence chip, etc. The specific type of the computing unit will not be limited in embodiments of the present disclosure.

According to embodiments of the present disclosure, the demand feature may be stored in the storage unit such as a cache unit, a video memory unit, etc., and part or all of the demand features may be determined from the storage unit as a value feature and a key feature of any attention subtask, so that the computing unit may perform the attention subtask according to the query feature, the value feature and the key feature, so as to realize a data processing process of the plurality of attention subtasks. This may avoid generating a corresponding value feature and key feature for each attention subtask, and storing a plurality of different value features and key features for the plurality of attention subtasks in the storage unit, so as to explain a storage space occupied by the computing unit in performing the target processing task based on the large model. At the same time, by using the demand feature as the value feature and the key feature shared by the plurality of attention subtasks, a computing overhead generated by using the computing unit to calculate the demand feature based on a value weight or a key weight may be saved, thereby reducing an overall computing overhead of the computing unit, improving an execution efficiency of the computing device in performing the target processing task based on the large model, and improving an efficiency of generating a response information.

The methods shown in FIG. 2A and FIG. 2B will be further described below in conjunction with specific embodiments with reference to the accompanying drawings.

In an example, the response text includes a plurality of response words arranged in sequence, a plurality of associated response words are arranged before the target response word, and the associated response words may serve as a context of the target response word. The associated response word feature is obtained by performing a feature fusion on the plurality of associated response words based on the attention mechanism. For example, an attention fusion may be performed on the plurality of associated response words based on a self-attention mechanism, so that the associated response word feature represents a generated response semantics. The attention fusion may be performed on the demand feature and a preceding context semantics represented by the associated response word feature by performing the plurality of attention subtasks based on the large model, and then target response words that are semantically coherent with a plurality of current associated response words may be generated in sequence based on a text generation capability of the large model, so that the response text may be matched with the demand intention.

According to embodiments of the present disclosure, the demand feature is determined by performing a feature extraction on the demand information of the target object, and an arrangement order of a plurality of sub-demand features in the demand feature is determined according to an arrangement order of a plurality of sub-demand information in the demand information. The plurality of sub-demand information may be sorted based on a preset sorting rule, or the plurality of sub-demand information may also be sorted based on a semantic rule of the demand information and a generation time sequence of the sub-demand information. The specific setting method of the arrangement order of the plurality of sub-demand information will not be limited in embodiments of the present disclosure.

According to embodiments of the present disclosure, the arrangement order of the plurality of sub-demand features may represent a semantic relationship between the plurality of sub-demand information in the demand information, so that a semantics characterized by the demand intention may be more accurately represented based on the arrangement order of the plurality of sub-demand features. Further, by using the plurality of sub-demand features in the demand feature as value features and key features, an attention fusion may be performed on the query feature based on the arrangement order of the plurality of sub-demand features without performing a position encoding on the demand feature, so as to implicitly represent positions of a plurality of sub-features in the value feature or key feature required to perform the attention subtask based on the arrangement order of the plurality of sub-demand features. This may avoid a redundant storage space occupation generated by a position encoding of the value feature or key feature, and may also avoid problems such as a low accuracy, a poor quality, etc. of the response text caused by a position mismatch generated by a position encoding of the value feature or key feature based on the arrangement order of the plurality of sub-demand features.

According to embodiments of the present disclosure, the sub-demand information includes at least one of: a demand word in a demand text, a demand voice frame in a demand voice, or an image block in a demand image.

According to embodiments of the present disclosure, the demand text includes a plurality of demand words arranged in an order corresponding to a semantic rule, the plurality of sub-demand features may be arranged in an order corresponding to the semantic rule, the sub-demand feature may include a semantic attribute characterized by a corresponding demand word, or the sub-demand feature may also include a semantic attribute characterized by the corresponding demand word and a context in the demand text.

According to embodiments of the present disclosure, the demand voice may be represented based on a demand voice frame sequence, and an order of a plurality of demand voice frames may be represented as an order of a plurality of words in a text expressed by the demand voice. The arrangement order of the plurality of sub-demand features may be the same as the arrangement order of the plurality of demand voice frames. The sub-demand feature may represent a semantic recognition attribute of the demand voice frame, such as a recognition semantics of the demand word in the demand text. Alternatively, the sub-demand feature may also include a corresponding demand voice frame and a context semantic attribute in the demand voice.

According to embodiments of the present disclosure, image blocks in the demand image may be arranged based on a preset order, a plurality of sub-demand features in a demand feature corresponding to a demand image block may have the same arrangement order as the plurality of image blocks, and the sub-demand feature may represent an image semantics of a corresponding image block. Alternatively, the sub-demand feature may also represent an image semantics of a corresponding image block and an image semantics of other image blocks in the demand image.

In an example, a feature extraction may be performed on a demand information based on a deep learning model. For example, a feature extraction and an attention fusion may be performed on each sub-demand information in the demand information based on the deep learning model constructed by an attention network algorithm, so as to obtain the plurality of sub-demand features. The sub-demand feature may correspond to the sub-demand information, and the sub-demand feature may be fused with a context semantics in the demand information based on the attention mechanism, so that the sub-demand feature may more fully characterize the demand intention. In this way, the plurality of sub-demand features may be used as the value features and the key features to more accurately represent the demand intention, so that a large language model may generate a response text with a high degree of matched with the demand intention by using the computing unit to perform the target processing task based on the large language model under a condition of fully understanding the demand intention of the demand information, thereby improving a quality of the response text.

According to embodiments of the present disclosure, a multi-level feature extraction may be performed on the demand information based on a plurality of feature extraction layers connected in cascade, so as to realize a deep feature extraction and fusion of the demand information. A hidden feature output by the last feature extraction layer or a hidden feature output by a specified feature extraction layer among the plurality of feature extraction layers may be used as the demand feature, which may avoid all hidden features output by the plurality of feature extraction layers from being input into the large model, so as to reduce a computational overhead of the computing unit in performing the target processing task based on the large model. Based on a hidden feature output by a network layer of a specified depth in the plurality of feature extraction layers as demand features, a representation of a semantic attribute of the demand intention by the demand feature may be adapted to an attention mechanism of the plurality of attention subtasks in the large model, which may reduce a data computation amount of the target processing task, while reducing a data transmission bandwidth and a storage redundancy required by the computing unit to perform the target processing task based on the large model, thereby efficiently performing the target processing task for the large model and improving a response efficiency for the target object.

In an example, the multi-level feature extraction may be performed on the demand information based on the plurality of feature extraction layers connected in cascade by the following example. The demand feature includes a demand text feature, and the demand text feature is determined based on: performing a first-level semantic feature extraction on a demand text of a target object, so as obtain a first-level intermediate demand text feature; performing an $n^{th}$-level semantic feature extraction on an $(n-1)^{th}$-level intermediate demand text feature, so as to obtain an $n^{th}$-level intermediate demand text feature including a plurality of $n^{th}$-level intermediate sub-demand features; and determining, in a case of N=n, an $N^{th}$ level intermediate demand text feature as the demand text feature.

According to embodiments of the present disclosure, N≥n>1, and N and n are integers.

According to embodiments of the present disclosure, the first-level intermediate demand text feature includes a plurality of first-level intermediate sub-demand features corresponding to a plurality of demand words in the demand text. A plurality of sub-demand features in the demand text feature correspond to the plurality of demand words, and an arrangement order of the plurality of sub-demand features is the same as an arrangement order of the plurality of demand words. The demand text feature may implicitly represent a position of each sub-feature in the value feature and the key feature based on the arrangement order of the plurality of sub-demand features.

For example, the performing a semantic feature extraction on the demand text may include performing a feature extraction on the demand text based on any type of algorithm such as an attention network algorithm, a convolutional neural network algorithm, etc.

In an example, the multi-level feature extraction may be performed on the demand information based on the plurality of feature extraction layers connected in cascade by the following example. The demand feature includes a demand image feature, and the demand image feature is determined based on: performing a first-level demand image feature extraction on a demand image of a target object, so as to obtain a first-level intermediate demand image feature; performing an $n^{th}$-level demand image feature extraction on an $(n-1)^{th}$-level intermediate demand image feature, so as to obtain an $n^{th}$-level intermediate demand image feature including a plurality of $n^{th}$-level intermediate sub-demand features; and determining, in a case of N=n, an $N^{th}$-level intermediate demand image feature as the demand image feature.

The first-level intermediate demand image feature includes a plurality of first-level intermediate sub-demand features corresponding to a plurality of image blocks in the demand image. A plurality of sub-demand features in the demand image feature correspond to the plurality of image blocks, and an arrangement order of the plurality of sub-demand features in the demand image feature is the same as a preset order between the plurality of image blocks.

The sub-demand feature in the demand image feature may represent an image semantics of image blocks whose arrangement positions have a mapping relationship, or the sub-demand feature in the demand image feature may represent an image semantics of image blocks whose arrangement positions have a mapping relationship, and a context image semantics represented by the plurality of image blocks.

In an example, the demand information is a demand voice, and the sub-demand information of the demand voice may be a demand voice frame. The multi-level feature extraction may be performed on the demand information based on the plurality of feature extraction layers, so as to obtain a plurality of sub-demand voice recognition features corresponding to the arrangement order of the plurality of demand voice frames.

According to embodiments of the present disclosure, the demand feature includes a plurality of sub-demand features arranged in sequence. The sub-demand features arranged in sequence may represent the demand intention of demand information of any modality based on the arrangement positions of the plurality of sub-demand features and a semantic attribute implied by the sub-demand feature.

According to embodiments of the present disclosure, the performing the plurality of attention subtasks by using a computing unit according to a plurality of query features, the value feature and the key feature includes: performing, based on an arrangement order between the plurality of sub-demand features in the key feature, a first computing operation by using the computing unit based on the plurality of sub-demand features and a plurality of sub-query features in the query feature, so as to obtain an attention weight for the attention subtask; and performing, based on an arrangement order between the plurality of sub-demand features in the value feature, a second computing operation by using the computing unit based on the attention weight and the plurality of sub-demand features, so as to obtain a sub-execution result of the attention subtask.

According to embodiments of the present disclosure, the first computing operation may include a computing operation process of fusing a query feature (Query) and a key feature (Key) based on an attention algorithm to obtain attention weights (Attention_Weights). The first computing operation may include, for example, a dot product operation and a normalization operation, in which attention scores output by the attention subtask may be obtained by calculating a dot product between the query feature (Query) and the key feature (Key). The normalization operation may be performed on the attention scores of the attention subtask by using the computing unit, so as to obtain an attention weight of the attention subtask.

For example, the first computing operation of the attention subtask may be represented based on the following formulas (1) and (2).

$$\text{scores} = Q_{\text{head}} \times K^{\text{T}}/\sqrt{dk} \quad (1);$$

$$\text{attention\_weights}=\text{softmax}(\text{scores}) \quad (2).$$

In the formulas, scores are the attention scores, attention_weights are the attention weights, softmax() is a normalization function, $\sqrt{dk}$ is a constant used to scale a dot product result, $Q_{\text{head}}$ is the query feature of the attention subtask, K represents the key feature of the attention subtask. When the demand feature is used as the key feature, the key feature may include a plurality of sub-demand features $c_i$ arranged in sequence. The key feature K is represented as K={c1, c2 ... ci}. The plurality of sub-query features in the query feature may perform the first computing operation based on a position of each of the plurality of sub-demand features arranged in sequence in the key feature, so as to perform the first computing operation by using the computing unit without adding a position encoding to the key feature and the query feature, thereby further saving a computing overhead and a storage space occupation of the computing unit in performing the attention subtask.

According to embodiments of the present disclosure, the value feature may include the plurality of sub-demand features $c_i$ arranged in sequence. The value feature may be represented as V={c1, c2... ci}. The second computing operation may include performing a weighted operation on the value feature based on the attention weight.

For example, the second computing operation of the attention subtask may be performed based on formula (3).

$$O_{\text{head}}=\text{attention\_weights} \times V \quad (3).$$

In the formula, $O_{\text{head}}$ is a sub-execution result of the attention subtask, and V is a value feature read from the storage unit. It should be understood that the sub-execution result may be a feature vector having the same dimension as the value feature or the key feature.

According to embodiments of the present disclosure, the target response word is determined based on sub-execution results of the plurality of attention subtasks. For example, based on computing results output by each of a plurality of attention heads as the sub-execution results of the plurality of attention subtasks, the target response word may be determined by fusing the sub-execution results of the plurality of attention subtasks based on the attention mechanism, and the response text may be obtained by iteratively generating a plurality of target response words.

According to embodiments of the present disclosure, for each of the plurality of attention subtasks, an attention computation may be performed by using the demand features stored in the storage unit as their respective value features and key features. In a case of saving a storage space of the storage unit, an attention fusion with the query feature may be performed using a position information implied by the arrangement order of the plurality of sub-demand features in the demand feature, so that the attention subtask may learn a mapping relationship between a query position and a sub-value feature position and a sub-key feature position. This may realize a cross-modality positional relationship adaptive calibration between the demand feature and the associated response word feature, further reduce a storage resource occupation for the computing unit, and enhance a storage capacity and a computing power compatibility of the computing device, thereby realizing an efficient use of storage resources and computing resources in a process of performing the target processing task on the large model.

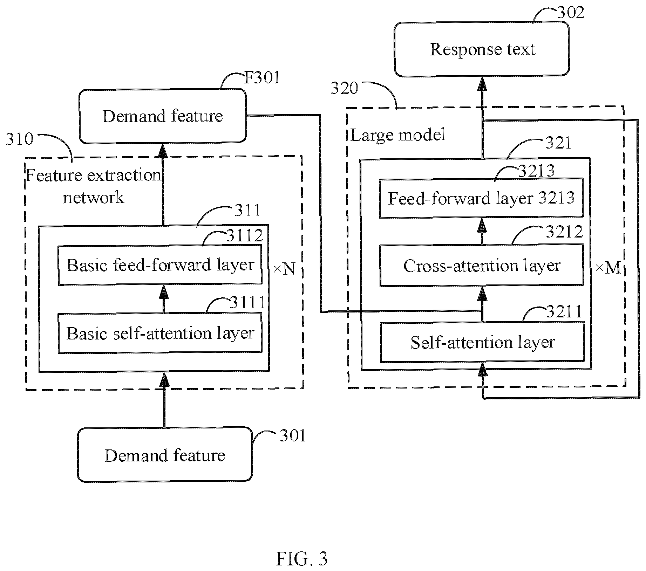

FIG. 3 schematically shows a principle diagram of a method of performing a task based on a large model according to embodiments of the present disclosure.

As shown in FIG. 3, the method of performing a task based on a large model may include performing a target processing task by using a computing unit based on a feature extraction network 310 and a large model 320. The feature extraction network 310 may include N feature extraction units 311 connected in cascade, and the feature extraction unit 311 may include a basic self-attention layer 3111 and a basic feed-forward layer 3112. The large model 320 includes M attention feature fusion units 321, and the attention feature fusion unit 321 includes a self-attention layer 3211 constructed based on a self-attention network algorithm, a cross-attention layer 3212 constructed based on an attention network algorithm, and a feed-forward layer 3213. The cross-attention layer 3212 may be constructed based on a multi-head attention network algorithm, and the cross-attention layer 3212 may include a plurality of attention heads. It should be noted that N and M are both arbitrary integers greater than 1.

A demand information 301 may be information of any modality such as audio, text, image, etc. The demand information 301 is input into the feature extraction network 310. Based on an attention mechanism, the computing unit may perform a multi-level feature extraction on the demand information 301 based on model parameters of the N feature extraction units 311 connected in cascade, and perform a deep fusion on a context semantics of the demand information 301, so as to obtain a demand feature F301 characterizing a demand intention. The demand feature F301 is written into a storage unit for the computing unit, so that the computing unit may perform a plurality of attention subtasks by reusing the demand feature F301 in the storage unit as a value feature and a key feature in a process of performing the target processing task based on the M attention feature fusion units 321 of the large model 320, so as to obtain a response text 302.

For example, in a case that a current response text includes p target response words, for a (p+1)th target response word to be generated, the p target response words are used as associated response words, and a first initial associated response word feature is determined based on response word features for generating the p target response words. For example, the response word features of the p target response words may be fused to obtain the first initial associated response word feature. By inputting the first initial associated response word feature into the self-attention layer 3211 of the first attention feature fusion unit 321, the computing unit may perform an attention fusion on an initial associated response word feature based on a model parameter of the self-attention layer 3211, so that a first associated response word feature obtained may fully fuse a preceding context semantics before the (p+1)th target response word in the response text. The first associated response word feature is input into the cross-attention layer 3212 of the first attention feature fusion unit 321. The first associated response word feature is processed by using the computing unit based on a model parameter of each of the plurality of attention heads in the cross-attention layer 3212, so as to obtain a plurality of query features for the plurality of attention heads. The demand feature is used as the value feature and the key feature, and the attention subtask is performed on the query feature, the value feature and the key feature by using the computing unit based on the model parameter of the attention head, so as to obtain a sub-execution result output by the attention head. The plurality of attention heads in the cross-attention layer 3212 of the first attention feature fusion unit 321 may use the same demand feature as the value feature and the key feature to perform an attention subtask corresponding to each of the plurality of attention heads, so as to obtain a plurality of sub-execution results. A first intermediate fusion feature output by the cross-attention layer 3212 of the first attention feature fusion unit 321 may be obtained by fusing the plurality of sub-execution results. By inputting the first intermediate fusion feature into the feed-forward layer 3213 of the first attention feature fusion unit 321, the computing unit may perform an operation on the first intermediate fusion feature based on the feed-forward layer 3213 of the first attention feature fusion unit 321, so as to obtain a second initial associated response word feature. By inputting the second initial associated response word feature into a second attention feature fusion unit, the plurality of attention subtasks may be performed by reusing the demand feature F301 stored in the storage unit through the computing unit, so as to obtain a third initial associated response word feature.

It should be understood that, by inputting an (m-1)th initial associated response word feature into an (m-1)th attention feature fusion unit, the plurality of attention subtasks may be performed by reusing the demand feature F301 stored in the storage unit through the computing unit, so as to obtain an mth initial associated response word feature. Where M≥m > 1. In a case of M=m, an Mth initial associated response word feature may be used as a target response word feature for generating the (p+1)th target response word. The (p+1)th target response word is generated based on the target response word feature of the (p+1)th target response word. Accordingly, the response text 302 output by using the large model 320 may be obtained by iteratively generating the plurality of target response words.

According to embodiments of the present disclosure, the determining a query feature for each of a plurality of attention subtasks in the target processing task based on an associated response word feature includes: processing, based on a query weight and a key weight for the attention subtask, the associated response word feature by using the computing unit, so as to obtain the query feature of the attention subtask.

According to embodiments of the present disclosure, a weighted computing operation may be performed on the associated response word feature by using the computing unit based on a merged result of the query weight and the key weight, so as to obtain the query feature of the attention subtask.

For example, the query feature of the attention subtask may be obtained based on the following formula (4):

$$Q_{head} = Wq * W_k * X \quad (4).$$

In the formula, Wq is the query weight, $W_k$ is the key weight, and X is the associated response word feature.

The query feature of the attention subtask may be obtained by combining the query weight and the key weight to perform a weighted computing operation on the associated response word feature, so that the query feature of each of the plurality of attention subtasks may be stored in the storage unit. The attention subtask may be performed by reusing the same demand feature from the storage unit as the value feature and the key feature through the computing unit, so that the plurality of query features may correspond to the same value feature and key feature, so as to reduce a computational overhead and a storage space occupation by performing a weighted computation on the demand feature to obtain a value feature and a key feature for each attention subtask, and improve an execution efficiency of the computing unit in performing the plurality of attention subtasks, thereby improving a target processing efficiency.

It should be noted that the query weight, the value weight and the key weight for the attention subtask involved in embodiments of the present disclosure may be model parameters of the large model obtained by training the large model. The method provided in embodiments of the present disclosure may include processing the associated response word feature by using the computing unit to call the value weight and the key weight, so as to avoid storing the value feature and the key feature of each of the plurality of attention subtasks by merging weight computing processes.

According to embodiments of the present disclosure, the plurality of query features include a first query feature and a second query feature, and the plurality of attention subtasks include a first subtask and a second subtask. The first query feature and the second query feature may be used for the first subtask and the second subtask, respectively.

According to embodiments of the present disclosure, the performing the plurality of attention subtasks by using a computing unit according to a plurality of query features, the value feature and the key feature includes: performing, based on the value feature and the key feature, the first subtask by using the computing unit according to the first query feature, so as to obtain a first sub-execution result; performing, in a case of reusing the value feature and the key feature, the second subtask by using the computing unit according to the second query feature, so as to obtain a second sub-execution result; and fusing the first sub-execution result and the second sub-execution result by using the computing unit, so as to obtain the target response word.

According to embodiments of the present disclosure, the performing, based on the value feature and the key feature, the first subtask by using the computing unit according to the first query feature may include processing a first query feature $Q_{head1}$ by using the computing unit based on an attention algorithm, and using the demand feature read from the storage unit as the value feature and the key feature, so as to obtain a first execution result $O_{head1}$ of the first subtask. When the second subtask is performed by using the computing unit, the same demand feature for the first subtask may be read from the storage unit as the value feature and the key feature, so as to perform the second subtask by reusing the same value feature and key feature. A second query feature $Q_{head2}$, the value feature and the key feature may be processed by using the computing unit based on the attention algorithm, so as to obtain a first execution result $O_{head2}$ of the second subtask.

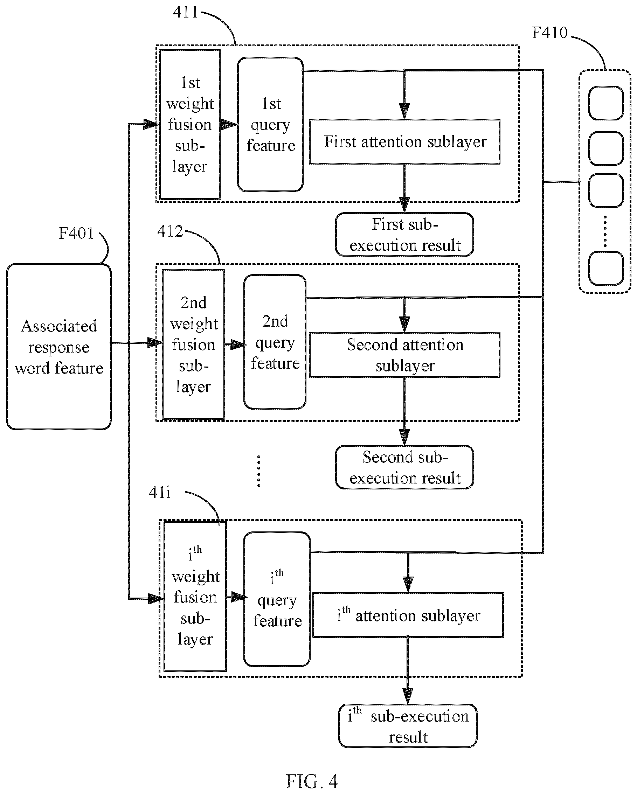

FIG. 4 schematically shows a schematic principle diagram of performing a plurality of attention subtasks.

As shown in FIG. 4, an associated response word feature F401 may be obtained by a self-attention layer of the large model performing an attention fusion on initial associated response word features for the plurality of associated response words. A demand feature F410 may be obtained by performing a feature extraction on a demand information, and the demand feature F410 may include a plurality of sub-demand features arranged in sequence. The demand feature F410 may be stored in a storage unit.

By inputting the associated response word feature F401 into a first attention head 411, a second attention head 412 ... an $i^{th}$ attention head 41i, the computing unit may perform $i^{th}$ attention subtasks according to the first attention head 411, the second attention head 412 ... the $i^{th}$ attention head 41i, where i is any integer greater than 1. By inputting the associated response word feature F401 into a first weight fusion sublayer of the first attention head 411, the computing unit may perform a weighted operation on the associated response word feature F401 by using the computing unit based on a first query weight and a first key weight of the first weight fusion sublayer, so as to obtain a first query feature. By inputting the demand feature F410 read from the storage unit into a first attention sublayer as a value feature and a key feature, and inputting the first query feature into the first attention sublayer, the computing unit may perform an attention computing operation on the demand feature F410 and the first query feature by using the computing unit based on a model parameter of the first attention sublayer, so as to obtain a first sub-execution result.

As shown in FIG. 4, by inputting the associated response word feature F401 into a second weight fusion sublayer of the second attention head 411, the computing unit may perform a weighted operation on the associated response word feature F401 by using the computing unit based on a second query weight and a second key weight of the second weight fusion sublayer, so as to obtain a second query feature. By inputting the demand feature F410 read from the storage unit into a second attention sublayer as a value feature and a key feature, and inputting the second query feature into the second attention sublayer, the computing unit may perform an attention computing operation on the demand feature F410 and the second query feature by using the computing unit based on a model parameter of the second attention sublayer, so as to obtain a second sub-execution result.

By inputting the associated response word feature F401 into an $i^{th}$ weight fusion sublayer of the $i^{th}$ attention head 411, the computing unit may perform a weighted operation on the associated response word feature F401 by using the computing unit based on an $i^{th}$ query weight and an $i^{th}$ key weight of the $i^{th}$ weight fusion sublayer, so as to obtain an $i^{th}$ query feature. By inputting the demand feature F410 read from the storage unit into an $i^{th}$ attention sublayer as a value feature and a key feature, and inputting the $i^{th}$ query feature into the $i^{th}$ attention sublayer, the computing unit may perform an attention computing operation on the demand feature F410 and the $i^{th}$ query feature based on a model parameter of the $i^{th}$ attention sublayer, so as to obtain an $i^{th}$ sub-execution result. In this way, the plurality of attention subtasks may be performed by reusing the demand feature in the storage unit, so as to improve a processing efficiency of the target processing task of the large model.

According to embodiments of the present disclosure, a sub-execution result of each of the plurality of attention subtasks includes the first sub-execution result and the second sub-execution result; and the fusing the first sub-execution result and the second sub-execution result by using the computing unit, so as to obtain the target response word includes: performing, based on a conversion weight and a value weight read from the storage unit, a weighted computation on a plurality of sub-execution results by using the computing unit to, so as to obtain an intermediate fusion feature; and determining the target response word by using the computing unit based on the intermediate fusion feature.

According to embodiments of the present disclosure, the computing unit may perform a weighted computing operation on a splicing result of the sub-execution results of the plurality of attention subtasks based on a conversion weight $W^O$ and a value weight $W_v$, so as to perform a linear transformation of a plurality of sub-execution results, obtain a final output result U of performing the plurality of attention subtasks, and use the final output result U of performing the plurality of attention subtasks as the intermediate fusion feature.

For example, the intermediate fusion feature may be determined based on the following formula (5).

$$U = W^{O*} W_v{}^* [O1; O2; O3; \ldots\ldots Oi;] \quad (5).$$

In the formula, U is a final output result of the plurality of attention subtasks as the intermediate fusion feature, $W_v$ is the value weight, and Oi is the $i^{th}$ sub-execution result of the $i^{th}$ attention subtask.

According to the method of performing a task based on a large model provided in embodiments of the present disclosure, the plurality of attention subtasks may be performed by reusing the demand feature in the storage unit as the value feature and the key feature, so that a plurality of different query features may form a mapping relationship with the same value feature and key feature, so as to realize that an occupation of a storage space occupied by the value feature and the key feature does not increase when the attention subtasks increase, thereby reducing a storage resource occupation for the computing unit. In this way, under a condition of retaining a multi-head attention mechanism to perform a multi-head attention computation on the demand feature and the associated response word feature, a redundant storage resource occupation caused by respectively saving the value feature and the key feature of each of the plurality of attention subtasks may be avoided, thereby reducing a storage space occupation by dozens of times. This may effectively reduce a resource occupation of using the large model to perform the target processing task when the large model is deployed to an electronic device in a scenario such as smart e-commerce, etc., so that the large model may be deployed on a computing device with a lower computing power performance, thereby reducing a deployment cost of the large model to generate a response text.

At the same time, by avoiding performing a corresponding value feature computing operation and a corresponding key feature computing operation on each attention subtask in a process of performing the plurality of attention subtasks, a computational complexity of the computing unit in performing the target processing task based on the large model may be reduced, so as to reduce a load pressure of the computing unit caused by performing the attention computing task through the large model, thereby optimizing a level of computing power consumption of the computing unit in a process of performing the target processing task based on the large model, and further improving an efficiency of generating the response text.

In an example, the demand information may be a demand voice input by a user based on a terminal device, and the response text may be generated based on the method of performing a task based on a large model provided in embodiments of the present disclosure.

According to embodiments of the present disclosure, the demand feature includes a demand voice recognition feature, and the demand voice recognition feature is determined based on: performing a feature extraction on a demand voice of a target object, so as to obtain an initial voice feature; decoding the initial voice feature to obtain a plurality of initial decoded features; and fusing the plurality of initial decoded features and the initial voice feature based on an attention mechanism, so as to obtain the demand voice recognition feature.

According to embodiments of the present disclosure, the initial decoded feature characterizes a demand voice frame in the demand voice, the demand voice frame characterizes a demand word, and the demand voice frame may be voice frame data obtained by pronouncing the demand word. The initial decoded feature characterizes a recognition result for the demand word in the demand voice. For example, the initial decoded feature may be a first voice recognition result corresponding to a demand word in a text expressed by the demand voice, and the plurality of initial decoded features correspond one-to-one to a plurality of demand words characterized by the demand voice.

According to embodiments of the present disclosure, the initial decoded feature and the initial voice feature may be processed based on any type of attention network algorithm such as Transformer, etc., so as to obtain a voice recognition feature.

According to embodiments of the present disclosure, by fusing the plurality of initial decoded features and the initial voice feature based on the attention mechanism, the voice recognition feature may include a text semantics of a demand word corresponding to a voice segment of the demand voice, and various types of voice attributes such as speaking speed, intonation, emotional attributes, etc. characterized by the demand voice, so that the voice recognition feature may include rich voice attributes while accurately representing a text semantics of the demand text, thereby improving an expression accuracy of the voice recognition feature for the demand intention.

According to embodiments of the present disclosure, the fusing the plurality of initial decoded features and the initial voice feature based on an attention mechanism, so as to obtain the demand voice recognition feature includes: fusing the initial decoding feature and the initial voice feature based on the attention mechanism, so as to obtain a demand word audio feature corresponding to the demand voice frame; performing a global feature fusion on a plurality of demand word audio features, so as to obtain an intermediate voice feature; and fusing the intermediate voice feature and the plurality of initial decoded features based on the attention mechanism, so as to obtain the demand voice recognition feature.

According to embodiments of the present disclosure, by fusing the initial decoded features and the initial voice feature based on the attention mechanism, the initial decoded feature corresponding to each demand word may be used as a prior information, and the initial decoded feature corresponding to each demand word may be fully fused with an audio segment corresponding to the initial voice feature, so that the demand word audio feature may more accurately characterize a text semantics and a voice attribute of the audio segment corresponding to the demand word.

According to embodiments of the present disclosure, the performing a global feature fusion on a plurality of demand word audio features may include fusing the plurality of demand word audio features based on an attention network algorithm, and the obtained intermediate voice feature may include intermediate voice word features corresponding to the plurality of demand words. From an audio information of a frame-level demand voice, word-level audio features that are uniform in length are extracted from a voice feature information with unequal length, and are represented as initial voice features of the demand voice. By using the plurality of initial decoded features as the prior information so as to fuse the initial voice feature and the plurality of initial decoded features, a defect of inconsistent feature representation lengths of voice framing may be avoided, thereby improving an accuracy of voice recognition.

According to embodiments of the present disclosure, the fusing the intermediate voice feature and the plurality of initial decoded features based on the attention mechanism, so as to obtain the voice recognition feature may include using the initial decoded feature as a voice query feature and using the intermediate voice feature as a voice key feature and a voice value feature of the attention algorithm. The voice recognition feature may be obtained by fusing the voice query feature, the voice key feature and the voice value feature based on the attention algorithm. The voice recognition features may characterize a text semantics and a voice attributes characterized by a voice audio segment corresponding to the demand word. By inputting the voice recognition feature into a plurality of attention fusion layers of the large model to realize a multi-modality feature fusion, the demand voice of an audio modality may be directly calculated with the associated response word feature after a modality conversion, which may avoid performing a modality conversion computation such as feature embedding, etc. on the demand voice in each network structure of the large model, and realize a depth computation between different modality information. In this way, information characterized by a voice modality and a text modality may be aligned more efficiently by using a voice recognition large model and a multi-level attention fusion layer, so as to improve a response speed of the large model to make a response to the demand voice.

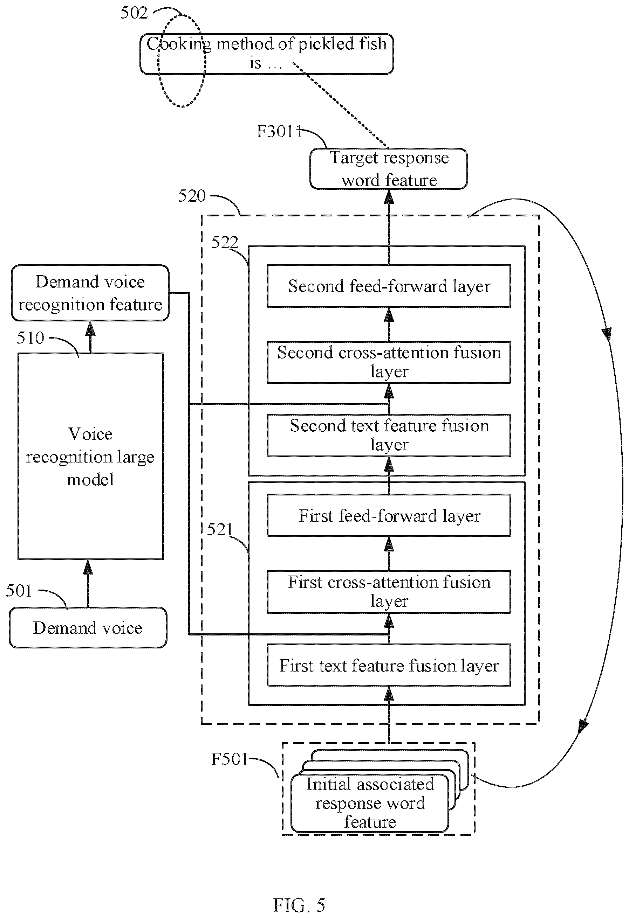

FIG. 5 schematically shows an application scenario diagram of a method of performing a task based on a large model according to embodiments of the present disclosure. In the embodiment shown in FIG. 5, the demand information may be a demand voice 501.

As shown in FIG. 5, the application scenario may include a voice recognition large model 510 and a large model 520. The large model 520 may include a first feature fusion network 521 and a second feature fusion network 522. The first feature fusion network 521 includes a first text feature fusion layer, a first cross-attention fusion layer, and a first feed-forward layer that are connected in cascade. The second feature fusion network 522 includes a second text feature fusion layer, a second cross-attention fusion layer, and a second feed-forward layer that are connected in cascade. The first cross-attention fusion layer and the second cross-attention fusion layer may be constructed based on a multi-head attention network algorithm. In the first cross-attention fusion layer, a plurality of attention subtasks for the first cross-attention fusion layer may be performed by a multi-head attention sublayer, and in the second cross-attention fusion layer, a plurality of attention subtasks for the second cross-attention fusion layer may be performed by the multi-head attention sublayer.

The demand voice 501 may be a voice audio information characterizing a demand text "how to cook pickled fish". A voice recognition may be performed on the demand voice 501 by inputting the demand voice 501 into the voice recognition large model 510, so as to output a demand voice recognition feature. The demand voice recognition feature may be stored in the storage unit as a value feature and a key feature for the first cross-attention fusion layer and the second cross-attention fusion layer.

An initial associated response word feature F501 may be related to three response words "of pickled fish" in the generated response text.

By inputting the initial associated response word feature F501 into the first text feature fusion layer, the computing unit may perform a self-attention fusion on the initial associated response word feature F501 based on the a model parameter of the first text feature fusion layer, so as to output a first associated response word feature. By inputting the first associated response word feature and the voice recognition feature into the first cross-attention fusion layer, the computing unit may perform the plurality of attention subtasks by determining, based on the voice recognition feature as a value feature and a key feature, a query feature of each of a plurality of attention heads in the first cross-attention fusion layer according to the first associated response word feature, so as to output a first intermediate fusion feature. The first intermediate fusion feature may be processed by the first feed-forward layer and the second text feature fusion layer first intermediate fusion feature, so as to obtain a second associated response word feature.

By inputting the second associated response word feature and the voice recognition feature into the second cross-attention fusion layer, the computing unit may perform a plurality of attention subtasks by determining, based on the voice recognition feature read from the storage unit as a value feature and a key feature, a query feature of each of a plurality of attention heads in the second cross-attention fusion layer according to the second associated response word feature, so as to output a second intermediate fusion feature. Therefore, attention subtasks of a plurality of multi-head attention layers in the large model may be performed by reusing the demand voice recognition feature in the storage unit. A target response word feature F5011 may be output by inputting the second intermediate fusion feature into the second feed-forward layer. The target response word feature F5011 may characterize a target response word "cook".

It should be understood that, for the target response word "cook", response words "cooking of pickled fish" in a response text 502 may be used as associated response words. An associated response word feature related to "cooking of pickled fish" may be processed based on the method of performing a task based on a large model provided in embodiments of the present disclosure, so as to obtain a new target response word. Until all response words arranged in sequence are generated, the response text 502 is obtained.

According to the method of performing a task based on a large model of embodiments of the present disclosure, by using the demand feature extracted from the demand information as the value feature and the key feature when the computing unit performs the plurality of attention subtasks, the plurality of attention subtasks characterizing a multi-head attention mechanism may be performed by reusing the same value feature and key feature in the storage unit, which may make full use of a plurality of query features in the multi-head attention mechanism to capture diversified information on the demand feature while reducing a problem of a large storage space occupancy of the multi-head attention mechanism. At the same time, a plurality of network layers constructed based on the attention mechanism in a more complex model structure of the large model may perform an attention task based on the same value feature and key feature, thereby avoiding the computing unit from performing a value feature computation and a key feature computation on each attention task, and realizing a semantic understanding and text generation demand of the attention task based on the shared value feature and key feature stored in a single storage space. At the same time, the attention task may be performed by using an implicit position information of an arrangement order of the plurality of sub-demand features in the demand feature, which may solve a defect of unstable training or reasoning performance of a cross-model attention task caused by a mismatch of feature position encoding, and perform an efficient all query attention mechanism on a cross-modality demand feature based on the large model to perform a generation task, thereby improving an execution efficiency of the target processing task based on the large model such as a large language model, etc., and reducing a computational overhead of the computing unit that performs the target processing task based on the large model and a storage space occupation of the storage unit.

According to embodiments of the present disclosure, the method of performing a task based on a large model further includes: acquiring a demand information of a target object; performing a feature extraction on the demand information, so as to obtain the demand feature; and pushing the response text to the target object.

According to embodiments of the present disclosure, the demand information may include information of any modality such as a demand voice, a demand text, a demand image, etc. input by a target object through a smart terminal such as a mobile phone, etc. A response text matched with a demand intention of the target object may be obtained by performing a feature extraction on the demand information and processing the demand feature based on the method provided in embodiments of the present disclosure. A response may be made by pushing the response text to a smart terminal device of the target object.

According to embodiments of the present disclosure, the response text pushed to the target object may be pushed to the smart terminal of the target object based on character formats such as a text, a code, etc., or may also be pushed to the smart terminal of the target object based on other types of data formats such as a voice, etc. The specific data format of the pushed response text will not be limited in embodiments of the present disclosure.

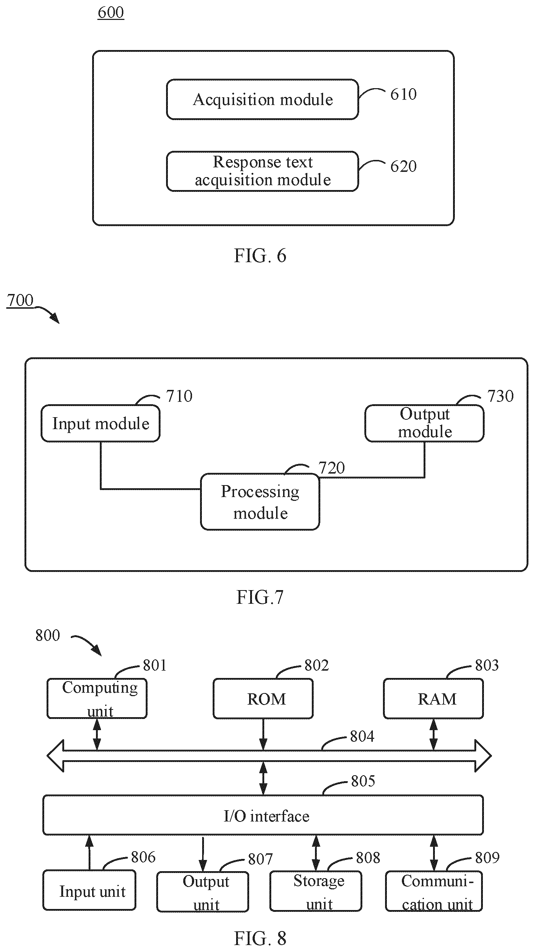

FIG. 6 schematically shows a block diagram of an apparatus of performing a task based on a large model according to embodiments of the present disclosure.

As shown in FIG. 6, an apparatus 600 of performing a task based on a large model includes: an acquisition module 610 and a response text acquisition module 620.

The acquisition module 610 is used to acquire a demand feature characterizing a demand intention.

The response text acquisition module 620 is used to perform a target processing task by using the large model according to the demand feature, so as to obtain a response text matched with the demand intention, where a target response word in the response text is determined based on: determining a query feature for each of a plurality of attention subtasks in the target processing task based on an associated response word feature, where the associated response word feature is determined based on an associated response word in the response text; and performing, based on the demand feature read from a storage unit as a value feature and a key feature shared by the plurality of attention subtasks, the plurality of attention subtasks by using a computing unit according to a plurality of query features, the value feature and the key feature, so as to obtain the target response word.

According to embodiments of the present disclosure, the plurality of query features include a first query feature and a second query feature, and the plurality of attention subtasks include a first subtask and a second subtask; and the computing unit is configured to perform the plurality of attention subtasks according to a plurality of query features, the value feature and the key feature by: performing, based on the value feature and the key feature, the first subtask according to the first query feature, so as to obtain a first sub-execution result; performing, in a case of reusing the value feature and the key feature, the second subtask according to the second query feature, so as to obtain a second sub-execution result; and fusing the first sub-execution result and the second sub-execution result to obtain the target response word.

According to embodiments of the present disclosure, a sub-execution result of each of the plurality of attention sub-tasks includes a first sub-execution result and a second sub-execution result; and the computing unit is configured to fuse the first sub-execution result and the second sub-execution result to obtain the target response word by: performing, based on a conversion weight and a value weight read from the storage unit, a weighted computation on a plurality of sub-execution results, so as to obtain an intermediate fusion feature; and determining the target response word based on the intermediate fusion feature.

According to embodiments of the present disclosure, the computing unit is configured to determine the query feature for each of the plurality of attention subtasks in the target processing task based on the associated response word feature by: processing, based on a query weight and a key weight for the attention subtask, the associated response word feature, so as to obtain the query feature of the attention subtask.

According to embodiments of the present disclosure, the demand feature includes a plurality of subdemand features arranged in sequence; and the computing unit is configured to perform the plurality of attention subtasks by a according to a plurality of query features, the value feature and the key feature by: performing, based on an arrangement order between the plurality of sub-demand features in the key feature, a first computing operation based on the plurality of sub-demand features and a plurality of sub-query features in the query feature, so as to obtain an attention weight for the attention subtask; and performing, based on an arrangement order between the plurality of sub-demand features in the value feature, a second computing operation based on the attention weight and the plurality of sub-demand features, so as to obtain a sub-execution result of the attention subtask, where the target response word is determined based on sub-execution results of the plurality of attention subtasks

According to embodiments of the present disclosure, the demand feature is determined by performing a feature extraction on a demand information of a target object, and an arrangement order of the plurality of subdemand features in the demand feature is determined according to an arrangement order of a plurality of subdemand information in the demand information; where the sub-demand information includes at least one of:

a demand word in a demand text, a demand voice frame in a demand voice, or an image block in a demand image.

According to embodiments of the present disclosure, the response text includes a plurality of response words arranged in sequence, and a plurality of associated response words are arranged before the target response word; and the associated response word feature is obtained by performing a feature fusion on the plurality of associated response words based on an attention mechanism.

According to embodiments of the present disclosure, the demand feature includes a demand voice recognition feature, and the demand voice recognition feature is determined based on: performing a feature extraction on a demand voice of a target object, so as to obtain an initial voice feature; decoding the initial voice feature to obtain a plurality of initial decoded features, where the initial decoded feature is used to characterize a demand voice frame in the demand voice, and the demand voice frame is used to characterize a demand word; and fusing the plurality of initial decoded features and the initial voice feature based on an attention mechanism, so as to obtain the demand voice recognition feature.

According to embodiments of the present disclosure, the fusing the plurality of initial decoded features and the initial voice feature based on an attention mechanism, so as to obtain the demand voice recognition feature includes: fusing the initial decoding feature and the initial voice feature based on the attention mechanism, so as to obtain a demand word audio feature corresponding to the demand voice frame; performing a global feature fusion on a plurality of demand word audio features, so as to obtain an intermediate voice feature; and fusing the intermediate voice feature and the plurality of initial decoded features based on the attention mechanism, so as to obtain the demand voice recognition feature.

According to embodiments of the present disclosure, the demand feature includes a demand text feature, and the demand text feature is determined based on: performing a first-level semantic feature extraction on a demand text of a target object, so as obtain a first-level intermediate demand text feature, where the first-level intermediate demand text feature includes a plurality of first-level intermediate sub-demand features corresponding to a plurality of demand words in the demand text; performing an $n^{th}$-level semantic feature extraction on an $(n-1)^{th}$-level intermediate demand text feature, so as to obtain an $n^{th}$-level intermediate demand text feature including a plurality of $n^{th}$-level intermediate sub-demand features; and determining, in a case of N=n, an $N^{th}$ level intermediate demand text feature as the demand text feature, where a plurality of sub-demand features in the demand text feature correspond to the plurality of demand words, where $N \geq n > 1$, and N and n are integers.

According to embodiments of the present disclosure, the demand feature includes a demand image feature, and the demand image feature is determined based on: performing a first-level demand image feature extraction on a demand image of a target object, so as to obtain a first-level intermediate demand image feature, where the first-level intermediate demand image feature includes a plurality of first-level intermediate sub-demand features corresponding to a plurality of image blocks in the demand image; performing an $n^{th}$-level demand image feature extraction on an $(n-1)^{th}$-level intermediate demand image feature, so as to obtain an $n^{th}$-level intermediate demand image feature including a plurality of $n^{th}$-level intermediate sub-demand features; and determining, in a case of N=n, an $N^{th}$-level intermediate demand image feature as the demand image feature, where a plurality of sub-demand features in the demand image feature correspond to the plurality of image blocks, where $N \geq n > 1$, and N and n are integers.

According to embodiments of the present disclosure, the apparatus 600 of performing a task based on a large model further includes: a demand information acquisition module, a feature extraction module and a push module.

The demand information acquisition module is used to acquire a demand information of a target object.

The feature extraction module is used to perform a feature extraction on the demand information, so as to obtain the demand feature.

The push module is used to push the response text to the target object.

FIG. 7 schematically shows a structural block diagram of an artificial intelligence agent according to embodiments of the present disclosure.

In embodiments of the present disclosure, as shown in FIG. 7, an AI agent 700 may include an input module 710, a processing module 720 and an output module 730.

The input module 710 is used to receive an input information.

The processing module 720 is used to determine a target task based on the input information received by the input module, determine a large model based on the target task, and perform the method of performing a task based on a large model provided in embodiments of the present disclosure by calling the large model, so as to obtain an output information.

The output module 730 is used to output the output information obtained by the processing module.

According to embodiments of the present disclosure, the input module 710 is responsible for receiving or sensing an information such as a query, a request, an instruction, a signal, data, etc. from the outside world (e.g., a user or an external environment), and converting them into a format that may be understood and processed by the AI agent 700. The input module 710 is a primary link for the AI agent 700 to interact with the outside world, which enables the AI agent 700 to efficiently and accurately obtain a necessary "sensory" information from the outside world and respond to the information.

In the example, the input module 710 may input the demand feature or demand voice, the demand text, the demand image, the demand information, etc. as described above.

In the example, the processing module 720 is a core support for the AI agent 700 to process a complex task. The processing module 720 may perform the method of performing a task based on a large model as described above.

In the example, a performance of the processing module 720 may be closely related to the large model on which the AI agent 700 is based. In order to give full play to a capability of the large model, an internal structure of the processing module 720 may be designed to be highly configurable and scalable so as to cope with various types of tasks and demands in a real scenario.

In the example, after the AI agent 700 acquires the demand feature, the processing module 720 may process the demand feature using the large model, so as obtain a response text, and pass the response text to the output module 730.

It may be understood that, although the large language model has an excellent language understanding and generation capability, it is just like a human being and may only solve very limited tasks without an aid of any tools. When the AI agent 700 is endowed with a capability to call a tool, it may complete tasks, such as perform a mathematical operation with a calculator, perform a data analysis with Python, and perform a weather forecast with a search engine.

In the example, the output module 730 may output the response text as described above.

The AI agent 700 according to embodiments of the present disclosure may simply and effectively improve a level of intelligence, and improve flexibility and versatility.

According to embodiments of the present disclosure, the present disclosure further provides an electronic device, a readable storage medium and a computer program product.

According to embodiments of the present disclosure, an electronic device is provided, including: at least one processor; and a memory communicatively connected to the at least one processor; where the memory is used to store instructions executable by the at least one processor, and the instructions, when executed by the at least one processor, are used to cause the at least one processor to perform the method as described above.

According to embodiments of the present disclosure, a non-transitory computer-readable storage medium having computer instructions stored thereon is provided, and the computer instructions are used to cause a computer to perform the method as described above.

According to embodiments of the present disclosure, a computer program product is provided, including a computer program, where the computer program, when executed by a processor, is used to implement the method as described above.

FIG. 8 shows a schematic block diagram of an exemplary electronic device 800 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and steps as described above, such as the method of performing a task based on a large model. For example, in some embodiments, the method of performing a task based on a large model may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by using the computing unit 801, may execute one or more steps in the method of performing a task based on a large model as described above. Alternatively, in other embodiments, the computing unit 801 may be configured to perform the method of performing a task based on a large model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, so that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method of performing a task based on a large model (320), comprising:

   acquiring (S210) a demand feature (F301) characterizing a demand intention;
   performing (S220) a target processing task by using the large model (320) according to the demand feature (F301), so as to obtain a response text (302) matched with the demand intention, wherein a target response word in the response text (302) is determined based on:

   determining (S221) a query feature for each of a plurality of attention subtasks in the target processing task based on an associated response word feature (F401), wherein the associated response word feature (F401) is determined based on an associated response word in the response text (302); and

performing (S222), based on the demand feature (F301) read from a storage unit as a value feature and a key feature shared by the plurality of attention subtasks, the plurality of attention subtasks by using a computing unit according to a plurality of query features, the value feature and the key feature, so as to obtain the target response word.

2. The method according to claim 1, wherein the plurality of query features comprise a first query feature and a second query feature, and the plurality of attention subtasks comprise a first subtask and a second subtask; and the performing (S222) the plurality of attention subtasks by using a computing unit according to a plurality of query features, the value feature and the key feature comprises:

performing, based on the value feature and the key feature, the first subtask by using the computing unit according to the first query feature, so as to obtain a first sub-execution result;
performing, in a case of reusing the value feature and the key feature, the second subtask by using the computing unit according to the second query feature, so as to obtain a second sub-execution result; and
fusing the first sub-execution result and the second sub-execution result by using the computing unit, so as to obtain the target response word.

3. The method according to claim 2, wherein a sub-execution result of each of the plurality of attention subtasks comprises the first sub-execution result and the second sub-execution result; and the fusing the first sub-execution result and the second sub-execution result by using the computing unit, so as to obtain the target response word comprises:

performing, based on a conversion weight and a value weight read from the storage unit, a weighted computation on a plurality of sub-execution results by using the computing unit, so as to obtain an intermediate fusion feature; and
determining the target response word by using the computing unit based on the intermediate fusion feature.

4. The method according to any one of claims 1 to 3, wherein the determining (S221) a query feature for each of a plurality of attention subtasks in the target processing task based on an associated response word feature (F401) comprises:

processing, based on a query weight and a key weight for the attention subtask, the associated response word feature (F401) by using the computing unit, so as to obtain the query feature of the attention subtask.

5. The method according to claim 1, wherein the demand feature (F301) comprises a plurality of sub-demand features arranged in sequence; and the performing (S222) the plurality of attention subtasks by using a computing unit according to a plurality of query features, the value feature and the key feature comprises:

performing, based on an arrangement order between the plurality of sub-demand features in the key feature, a first computing operation by using the computing unit based on the plurality of sub-demand features and a plurality of sub-query features in the query feature, so as to obtain an attention weight for the attention subtask; and
performing, based on an arrangement order between the plurality of sub-demand features in the value feature, a second computing operation by using the computing unit based on the attention weight and the plurality of sub-demand features, so as to obtain a sub-execution result of the attention subtask, wherein the target response word is determined based on sub-execution results of the plurality of attention subtasks.

6. The method according to claim 5, wherein the demand feature (F301) is determined by performing a feature extraction on a demand information (301) of a target object, and an arrangement order of the plurality of sub-demand features in the demand feature (F301) is determined according to an arrangement order of a plurality of sub-demand information in the demand information (301); wherein the sub-demand information comprises at least one of:
a demand word in a demand text, a demand voice frame in a demand voice (501), or an image block in a demand image.

7. The method according to claim 1, wherein the response text (302) comprises a plurality of response words arranged in sequence, and a plurality of associated response words are arranged before the target response word; and the associated response word feature (F401) is obtained by performing a feature fusion on the plurality of associated response words based on an attention mechanism.

8. The method according to claim 1, wherein the demand feature (F301) comprises a demand voice recognition feature, and the demand voice recognition feature is determined based on:

performing a feature extraction on a demand voice (501) of a target object, so as to to obtain an initial voice feature;

decoding the initial voice feature to obtain a plurality of initial decoded features, wherein the initial decoded feature is configured to characterize a demand voice frame in the demand voice (501), and the demand voice frame is configured to characterize a demand word; and

fusing the plurality of initial decoded features and the initial voice feature based on an attention mechanism, so as to obtain the demand voice recognition feature.

9. The method according to claim 8, wherein the fusing the plurality of initial decoded features and the initial voice feature based on an attention mechanism, so as to obtain the demand feature (F301) comprises:

fusing the initial decoded feature and the initial voice feature based on the attention mechanism, so as to obtain a demand word audio feature corresponding to the demand voice frame;

performing a global feature fusion on a plurality of demand word audio features, so as to obtain an intermediate voice feature; and

fusing the intermediate voice feature and the plurality of initial decoded features based on the attention mechanism, so as to obtain the demand voice recognition feature.

10. The method according to claim 1, wherein the demand feature (F301) comprises a demand text feature, and the demand text feature is determined based on:

performing a first-level semantic feature extraction on a demand text of a target object, so as obtain a first-level intermediate demand text feature, wherein the first-level intermediate demand text feature comprises a plurality of first-level intermediate sub-demand features corresponding to a plurality of demand words in the demand text;

performing an $n^{th}$-level semantic feature extraction on an $(n-1)^{th}$-level intermediate demand text feature, so as to obtain an $n^{th}$-level intermediate demand text feature comprising a plurality of $n^{th}$-level intermediate sub-demand features; and

determining, in a case of N=n, an $N^{th}$ level intermediate demand text feature as the demand text feature, wherein a plurality of sub-demand features in the demand text feature correspond to the plurality of demand words, wherein $N \geq n > 1$, and N and n are integers.

11. The method according to claim 1, wherein the demand feature (F301) comprises a demand image feature, and the demand image feature is determined based on:

performing a first-level demand image feature extraction on a demand image of a target object, so as to obtain a first-level intermediate demand image feature, wherein the first-level intermediate demand image feature comprises a plurality of first-level intermediate sub-demand features corresponding to a plurality of image blocks in the demand image;

performing an $n^{th}$-level demand image feature extraction on an $(n-1)^{th}$-level intermediate demand image feature, so as to obtain an $n^{th}$-level intermediate demand image feature comprising a plurality of $n^{th}$-level intermediate sub-demand features; and

determining, in a case of N=n, an $N^{th}$-level intermediate demand image feature as the demand image feature, wherein a plurality of sub-demand features in the demand image feature correspond to the plurality of image blocks, wherein $N \geq n > 1$, and N and n are integers.

12. The method according to claim 1, further comprising:

acquiring a demand information (301) of a target object;

performing a feature extraction on the demand information (301), so as to obtain the demand feature (F301); and

pushing the response text (302) to the target object.

13. An electronic device (800), comprising:

at least one processor; and
a memory communicatively connected to the at least one processor; wherein
the memory is configured to store instructions executable by the at least one processor, and the instructions, when executed by the at least one processor, are configured to cause the at least one processor to perform the method according to any one of claims 1 to 12.

14. A non-transitory computer-readable storage medium having computer instructions stored thereon, wherein the computer instructions, when executed by a processor, are configured to cause a computer to perform the method according to any one of claims 1 to 12.

15. A computer program product comprising a computer program, wherein the computer program, when executed by a processor, is configured to implement the

**EP 4 657 319 A2**

method according to any one of claims 1 to 12.

100

FIG. 1

| A demand feature characterizing a demand intention is acquired | S210 |

| A target processing task is performed by using the large model according to the demand feature | S220 |

FIG. 2A

| A query feature for each of a plurality of attention subtasks in the target processing task is determined based on an associated response word feature | S221 |

| Based on the demand features read from a storage unit as a value feature and a key feature shared by the plurality of attention subtasks, the plurality of attention subtasks are performed by using a computing unit according to a plurality of query features, the value feature and the key feature | S222 |

FIG. 2B

FIG. 3

411

F410

1st weight fusion sub-layer

1st query feature

First attention sublayer

First sub-execution result

F401

Associated response word feature

412

2nd weight fusion sub-layer

2nd query feature

Second attention sublayer

Second sub-execution result

41i

$i^{th}$ weight fusion sub-layer

$i^{th}$ query feature

$i^{th}$ attention sublayer

$i^{th}$ sub-execution result

FIG. 4

502

Cooking method of pickled fish
is ...

F301

Target response
word feature

520

522

Second feed-forward layer

Second cross-attention fusion
layer

Demand voice
recognition feature

Second text feature fusion
layer

510

Voice
recognition large
model

521

First feed-forward layer

First cross-attention fusion
layer

501

First text feature fusion layer

Demand voice

F501

Initial associated
response word
feature

FIG. 5

600

Acquisition module — 610

Response text
acquisition module — 620

FIG. 6

700

Input module — 710

Processing
module — 720

Output
module — 730

FIG.7

800

Computing
unit — 801

ROM — 802

RAM — 803

— 804

— 805

I/O interface

Input unit — 806

Output
unit — 807

Storage
unit — 808

Communi-
cation unit — 809

FIG. 8